# EUROPÄISCHE PATENTSCHRIFT

(11) **EP 0 751 447 B1**
(45) Veröffentlichungstag und Bekanntmachung des Hinweises auf die Patenterteilung: **19.12.2001**
(21) Anmeldenummer: 95109953.0
(22) Anmeldetag: 26.06.1995
(51) Int. Cl.: G05B 19/4103

(54) **Numerisches Steuerverfahren**
Numerical control method
Méthode de commande numérique

(43) Veröffentlichungstag der Anmeldung: 02.01.1997
(73) Patentinhaber: SIEMENS AKTIENGESELLSCHAFT, 80333 München (DE)
(72) Erfinder: Schleicher, Siegfried, Dr., D-09113 Chemnitz (DE); Welker, Johannes, Dipl.-Ing. (Univ.), D-92318 Neumarkt (DE); Quaschner, Bernd, D-91096 Möhrendorf (DE)

(56) Entgegenhaltungen:
- EP-A- 0 530 790
- EP-B- 0 309 824
- DE-A- 3 940 621
- DE-U- 9 206 933
- US-A- 3 715 644

## Beschreibung

Die Erfindung bezieht sich auf ein Verfahren sowie eine Vorrichtung zur numerischen Steuerung von Maschinen mit mehreren Achsen, insbesondere Werkzeugmaschinen oder Robotern, mit Verkopplung mehrerer Achsen im Sinne der Funktionalität eines elektronischen Getriebes, wobei
1.1 eine oder mehrere Interpolationen verkoppelt, im Sinne der Funktionalität eines elektronischen Getriebes, welche eine Leitbewegung in eine Folgebewegung umsetzen, durchgeführt werden.

Bei heute standardgemäß eingesetzten numerischen Steuerungen, insbesondere für Werkzeugmaschinen und Roboter, wird ein Bewegungsablauf mehrerer Achsen durch aneinandergereihte sogenannte Basis-Interpolationsabschnitte für einen ablaufsteuernden Basisinterpolator programmiert. Dafür kann entsprechend der beteiligten Achsbewegungen aus einer beschränkten Anzahl von Konfigurationen sowie unter verschiedenen Interpolationsarten wie beispielsweise Linear-, Zirkular- und Splineinterpolation, ausgewählt werden. Bewegungsabschnitte und damit verbunden die Interpolationsart sowie der Vorschub arbeiten hierbei in der Regel satzorientiert. Dazu wird jeweils aus einem vorhandenen Steuerdatenprogramm bzw. Teileprogramm ein darin enthaltener Steuerungsdatensatz abgearbeitet. Eingangsgrößen der Basisinterpolation sind stets die Bahnparameter, die Ausgangsgröße sind immer entweder die Sollposition oder die entsprechende Geschwindigkeit.

Aus der DE-A 39 40 621 und der US-PS 3 715 644 ist bekannt, daß bei numerischen Steuerungen zusätzlich zu einer bzw. mehreren Basisinterpolationen weitere Interpolationsschritte durchgeführt werden können. Aus EP 0 530 790 A2 ist bekannt, daß die Vorschubgeschwindigkeit von Werkzeugen innerhalb eines einzigen kompletten Bahnabschnittes gesteuert werden kann und keine Zerlegung in Teilabschnitte zu erfolgen braucht.

Für eine komplexe mehrachsige Bewegung, z.B. einen komplexen Abspanprozeß, müssen mehrere Achs-Führungsgrößen bereitgestellt werden, für welche mehrere synchron ablaufende Kanäle, bezugnehmend auf eine Werkzeugmaschine sogenannte NC-Kanäle, z.B. für die Schnittbewegung, die Vorschubbewegung und die Zustellbewegung vom Zahnradstoßen, notwendig sind. Zur Bereitstellung solcher Achs-Führungsgrößen existiert derzeit noch keine direkt mit der Geometrieerzeugung gekoppelte Führungswert-Interpolation für eine Prozeßsteuerung bzw. Prozeßregelung. Darüber hinaus ist kein CNC-integriertes, direkt mit der Geometrieerzeugung gekoppeltes Überwachungssystem bekannt.

Herkömmlicherweise ist eine Anpassung der Prozeßregelungs-bzw. Überwachungs-Steuerparameter an wechselnde technologische Prozeßbedingungen nur gekoppelt an einen Satzwechsel innerhalb eines Steuerungsdatenprogrammes möglich. Aus diesem Grunde können somit über den gesamten Bearbeitungsabschnitt, einem Interpolationsabschnitt, nur relativ grobe, nicht für den gesamten Verlauf des Bearbeitungsabschnittes exakt zutreffende Überwachungswerte programmiert werden. Lediglich an einem Satzwechsel ist es möglich, Steuerparameter bzw. Führungswerte an technologische Prozeßbedingungen anzupassen. Bei einer herkömmlichen Basisinterpolation ist in der Regel eine Zerlegung der Geometrie einer Sollbahn in sehr viele Bahnabschnitte bzw. Sätze erforderlich. Dies erlaubt wegen der häufigen und somit rechenaufwendigen Satzaufbereitung jedoch keine Hochgeschwindigkeitsbearbeitung mit hohen Bahnvorschubgeschwindigkeiten. Hinzu kommt, daß für eine Werkzeugüberwachung bisher ein Überwachungsgrenzwert bereits zu dem Zeitpunkt aktiv geschaltet wird, wenn beispielsweise ein Fräser in die Frässpindel als aktives Werkzeug eingewechselt bzw. im Bearbeitungsablauf aktiviert wird. Während eines Steuerprogramm-Satzes bleibt der Überwachungsführungswert jedoch konstant.

Ein Verfahren der eingangs genannten Art und eine zugehörige Vorrichtung sind aus der EP 0 309 824 B1 bekannt. Dabei wird jedoch nur das regelungstechnische Verkoppeln von Leit- und Folgeachsen aufgezeigt.

Der Erfindung liegt daher die Aufgabe zugrunde, ein Verfahren sowie eine Vorrichtung der eingangs genannten Art so auszubilden, daß komplexe geometrische und dazu zugeordnete bzw. gekoppelte technologische Sollwertprofile, insbesondere für Sondertechnologien wie z.B. Zahnradwalzfräsen, Zahnradstoßen, Zahnradschleifen oder Nockenwellenschleifen, äußerst einfach erzeugt werden. Gleichzeitig sollen Toleranzbandprofile bzw. Grenzwertprofile zu einer Prozeßüberwachung erzeugt werden. Es soll der in einem Steuerungskanal mit einem Steuerungsdatenteileprogramm gesteuerte Bearbeitungsprozeß auf mehrere gekoppelte, gleichzeitig ablaufende Interpolationen erweitert werden. Eine Führungswertinterpolation für eine Prozeßsteuerung bzw. Prozeßregelung soll dazu direkt mit der Geometrieerzeugung gekoppelt werden und darüber hinaus ein direkt mit der Geometrieerzeugung gekoppeltes Überwachungssystem zur Verfügung gestellt werden. Zusätzlich soll eine Anpassung von Prozeßregelungs- bzw. Überwachungssteuerparametern an wechselnde technologische Prozeßbedingungen von Satzwechseln innerhalb eines Steuerungsprogrammes entkoppelt werden und eine detailliertere auf den gesamten Verlauf eines Bearbeitungsabschnittes zugeschnittene Auflösung von Überwachungswerten ermöglicht werden.

Gemäß der Erfindung wird diese Aufgabe dadurch gelöst, daß
1.2 jede dieser Interpolationen, verkoppelt im Sinne der Funktionalität eines elektronischen Getriebes, parallel zu einer oder mehreren Basisinterpolationen zugeordnet wird,
1.3 eine dieser Interpolationen, verkoppelt im Sinne der Funktionalität eines elektronischen Getriebes, unabhängig von Satzgrenzen einer Basisinterpolation in eigenen Interpolations-Abschnitten für die Steuerung zuständig ist.

Eine Achsverkopplung im Sinne der Funktionalität eines elektronischen Getriebes wird in der weiteren Beschreibung der Einfachheit halber als "Getriebeinterpolation" bezeichnet. Der Vorteil dieser Getriebeinterpolation liegt darin, daß sie nicht seriell, sondern parallel zu einer oder mehreren Basisinterpolationen durchführbar ist. Durch diese Parallelität ergibt sich eine Unabhängigkeit der Satzgrenzen der Interpolationen. Dies ist ein ausgesprochener Vorteil gegenüber dem Gegenstand der US-PS 3 715 644, da beim dort beschriebenen Verfahren die Satzgrenzen der zusätzlichen Interpolationen abhängig von denen der Basisinterpolationen sind.

In einer darüber hinaus vorteilhaften Ausgestaltung der vorliegenden Erfindung wird das Prinzip einer Getriebeinterpolation, nach dem eine Leitbewegung eine Folgebewegung treibt, besonders flexibel und variabel ausgeführt. Wie aus der deutschen Gebrauchsmusterschrift G 92 06 933.9 bekannt ist, wird für die Sollbahnerzeugung im Falle des Abtastens einer gespeicherten Soll-Achsbahn eine solche in Abhängigkeit eines Tabellenplatzzeigers einer Tabelle gespeichert. Der genannten Schrift ist zu entnehmen, daß für die Sollbahnerzeugung nicht nur eine sondern zwei Soll-Achsbahnen in einer Tabelle gespeichert werden und daraus abgetastet werden können. Diese Möglichkeit einer Kopplung innerhalb einer Getriebeinterpolation soll nun erfindungsgemäß dahingehend erweitert werden, daß diese auch für beliebig viele Soll-Achsbahnen und darüber hinaus auch für andere Soll-Parameterverläufe wie beispielsweise Soll-Führungsgrößen gespeichert werden können. Zusätzlich werden die Möglichkeiten einer Kopplung innerhalb einer Getriebeinterpolation durch weitere Kopplungsverfahren fortentwickelt. Diese Aufgabe wird dadurch gelöst, daß
2.1 das Koppelverhalten einer Achskopplung, verkoppelt im Sinne der Funktionalität eines elektronischen Getriebes, mittels eines Koppelfaktors und/oder einer tabellarisch gespeicherten Steuerkurve, insbesondere für beliebig viele Soll-Achsbahnen und/oder Soll-Führungsgrößen, und/oder einer als mathematische Funktionsgleichung gespeicherten Steuerkurve programmiert wird.

In einer weiterhin vorteilhaften Ausgestaltung der vorliegenden Erfindung werden die Einsatzmöglichkeiten der eingeführten Getriebeinterpolationen erweitert und besonders flexibel gestaltet. Diese vorteilhafte Ausgestaltung erreicht, daß die neu eingeführten Getriebeinterpolationen frei konfigurierbar mit und neben bereits vorhandenen Basisinterpolationen durchgeführt werden können. Dies wird dadurch erreicht, daß
3.1 Achskopplungen, verkoppelt im Sinne der Funktionalität eines elektronischen Getriebes, kaskadiert werden und/oder
3.2 Achskopplungen, verkoppelt im Sinne der Funktionalität eines elektronischen Getriebes, direkt oder indirekt rückgekoppelt werden, indem der Ausgangswert oder die Ausgangswerte einer oder mehrerer Achskopplungen, verkoppelt im Sinne der Funktionalität eines elektronischen Getriebes, als Eingangswert dieser und/oder einer Basisinterpolation und/oder von weiteren Achskopplungen, verkoppelt im Sinne der Funktionalität eines elektronischen Getriebes, verwendet werden, und/oder
3.3 Achskopplungen, verkoppelt im Sinne der Funktionalität eines elektronischen Getriebes, je nach Bedarf variabel mit beliebigen vorhandenen Quellen und Aktoren verschaltet werden.

In einer darüber hinaus vorteilhaften Ausgestaltung wird erreicht, daß Getriebeinterpolationen und deren Parametrierung im Rahmen der bei Basisinterpolationen vorhandenen und für NC-Teileprogramme bzw. Steuerdatenprogramme üblichen Form programmiert werden können. Dies wird dadurch erreicht, daß
4.1 eine Achskopplung, verkoppelt im Sinne der Funktionalität eines elektronischen Getriebes, in einem Steuerdatenprogramm satzweise bezüglich
   Einschaltbedingungen und Ausschaltbedingungen für den Getriebeinterpolations-Abschnitt, wobei als Getriebeinterpolation Achskopplungen, verkoppelt im Sinne der Funktionalität eines elektronischen Getriebes, vorzusehen sind, und/oder
   der Zuweisung eines Koppelfaktors oder einer Steuerkurve und/oder
   der logischen Systemorganisation mehrerer Interpolationen programmiert wird.

In einer weiteren vorteilhaften Ausgestaltung des vorliegenden erfindungsgemäßen Verfahrens werden Getriebeinterpolationen von Limitierungen der Basisinterpolation entkoppelt, wodurch eine höhere Flexibilität sowie ein besserer und vor allem genauerer, auf die Steuerungsaufgabe zugeschnittener Einsatz von Getriebeinterpolationen ermöglicht wird. Dies wird dadurch erreicht, daß
5.1 Achskopplungen, verkoppelt im Sinne der Funktionalität eines elektronischen Getriebes, während eines Steuerungsprogrammlaufs unabhängig von dessen Satzgrenzen gemäß ihrer programmierten Einschaltbedingungen aktiviert bzw. gemäß ihrer programmierten Ausschaltbedingungen deaktiviert werden.

In einer darüber hinaus vorteilhaften Ausgestaltung des erfindungsgemäßen Verfahrens werden Konfigurationsparameter der Getriebeinterpolation von den herkömmlicherweise bei Basisinterpolationen für Wertänderungen vorgesehenen Satzgrenzen entkoppelt, so daß an beliebigen Stellen innerhalb eines Steuerungsdatensatzes Veränderungen an Parametern von Getriebeinterpolationen vorgenommen werden können. Diese Aufgabe wird dadurch gelöst, daß
6.1 ein Koppelfaktor und/oder eine Steuerkurve einer Achsverkopplung, verkoppelt im Sinne der Funktionalität eines elektronischen Getriebeabschnittes, mittels Einschaltbedingungen und/oder Umschaltbedingungen parametriert wird und durch diese unabhängig von Steuerungsprogramm-Satzgrenzen eingeschaltet beziehungsweise umgeschaltet wird.

In einer weiteren vorteilhaften Ausgestaltung werden die Einsatzmöglichkeiten der erfindungsgemäßen Getriebeinterpolation erheblich erweitert, da diese nunmehr nicht nur zur Erzeugung von geometrischen Sollwerten, sondern darüber hinaus auch für weitere Steuerungs- und Überwachungszwecke eingesetzt werden können. Dies wird dadurch erreicht, daß
7.1 ein Ausgang einer oder mehrerer Achskopplungen, verkoppelt im Sinne der Funktionalität eines elektronischen Getriebes, neben einer Geometrieinterpolation alternativ auch zur Führungswertinterpolation, insbesondere für die Prozeßsteuerung und -überwachung, verwendet wird.

In einer zusätzlichen vorteilhaften Ausgestaltung des erfindungsgemäßen Verfahrens werden die Parametrierungsmöglichkeiten hinsichtlich des Koppelverhaltens einer Getriebeinterpolation, welche eine Leitbewegung in eine Folgebewegung umsetzt, erweitert, indem für das Koppelverhalten vorgesehener Steuerungskurven die darin tabellarisch abgespeicherten Werte nicht fest vorgegeben sein müssen. Dies wird dadurch gelöst, daß
8.1 eine Steuerkurve für das Koppelverhalten einer Achskopplung, verkoppelt im Sinne der Funktionalität eines elektronischen Getriebes, erlernt wird, insbesondere durch den Einsatz eines neuronalen Netzes.

In einer weiteren vorteilhaften Ausgestaltung des erfindungsgemäßen Verfahrens wird erreicht, daß einmal vorgenommene Konfigurationen von Getriebeinterpolationen nicht ständig bestätigt werden müssen, sondern diese global bis zu einer gewünschten Konfigurationsänderung zur Verfügung stehen. Dies wird dadurch erreicht, daß
9.1 die Konfiguration einer oder mehrerer Achskopplungen, verkoppelt im Sinne der Funktionalität eines elektronischen Getriebes, jeweils über einen Steuerungsprogramm-Satz und über das Steuerungsprogramm hinaus bis zur expliziten Abwahl aktiv ist. Eine vorteilhafte Vorrichtung zur Durchführung des Verfahrens gemäß der vorliegenden Erfindung zeichnet sich dadurch aus, daß sie mit einfachen Mitteln und begrenztem Aufwand effektiv realisiert wird. Außerdem läßt sie sich besonders einfach in bereits vorhandene numerische Steuerungen integrieren. Im Bezug auf bereits vorhandene Basisinterpolationseinheiten werden zudem Maßnahmen getroffen, welche es ermöglichen, eine besonders flexible Kombination von bekannten Basisinterpolationseinheiten und neu eingeführten Getriebeinterpolations-einheiten vorzunehmen. Dies wird dadurch erreicht, daß bei einer Vorrichtung der eingangs genannten Art
10.2 diese Interpolations-Einheiten, verkoppelt im Sinne der Funktionalität eines elektronischen Getriebes, über einen Konfigurations-Schaltblock mit Führungsgrößen, untereinander und/oder mit einer Basisinterpolationseinheit verschaltet sind,
10.3 die Ausgänge dieser Interpolations-Einheiten, verkoppelt im Sinne der Funktionalität eines elektronischen Getriebes, und/oder Basisinterpolationseinheiten über den Konfigurations-Schaltblock auf ihre Eingänge rückkoppelbar sind.

Die mit der Erfindung erzielten Vorteile bestehen insbesondere darin, daß komplexe geometrische und dazu zugeordnete bzw. gekoppelte technologische Sollwertprofile gleichzeitig erzeugt werden können. Neben der Erzeugung von Sollbahnen besteht daneben auch die Möglichkeit, gleichzeitig zu einer Prozeßsteuerung bzw. Prozeßüberwachung Toleranzbandprofile bzw. Schaltschwellen vorzugeben. Dies wird erreicht, ohne daß in einem NC-Kanal mehrere Teileprogramme zur Steuerung des Bearbeitungsprozesses notwendig werden, sondern nach wie vor mit einem einzigen Teileprogramm gearbeitet werden kann, indem solchermaßen gesteuerte Bearbeitungsprozesse auf mehrere gekoppelte, gleichzeitig ablaufende Interpolationen erweitert werden. Mögliche Führungsgrößeninterpolationen lassen sich dazu direkt mit der Geometrieerzeugung koppeln, woraus sich direkt mit der Geometrieerzeugung verbundene Überwachungssysteme bilden lassen. Darüber hinaus lassen sich auf diese Weise Geometrieerzeugung, Prozeßregelung und Prozeßüberwachung an wechselnde technologische Prozeßbedingungen vom Satzwechsel innerhalb eines Steuerungsprogrammes entkoppeln und dadurch eine feinere und definiertere Auflösung erreichen, welche auf den gesamten Verlauf eines Bearbeitungsabschnittes zugeschnitten ist.

Weitere Vorteile und erfinderische Einzelheiten ergeben sich aus nachfolgender Beschreibung eines Ausführungsbeispiels anhand der Zeichnungen in Verbindung mit den Unteransprüchen. Dabei zeigt:
- FIG 1: einen Werkstückrohling auf einem Fräsmaschinentisch in X-Y-Ebene zur Erzeugung einer mechanischen Steuerkurve in Form einer Steuernut und
- FIG 2: numerische Steuerung für einen Fräser zur Geometrieerzeugung, Prozeßsteuerung und Prozeßüberwachung.

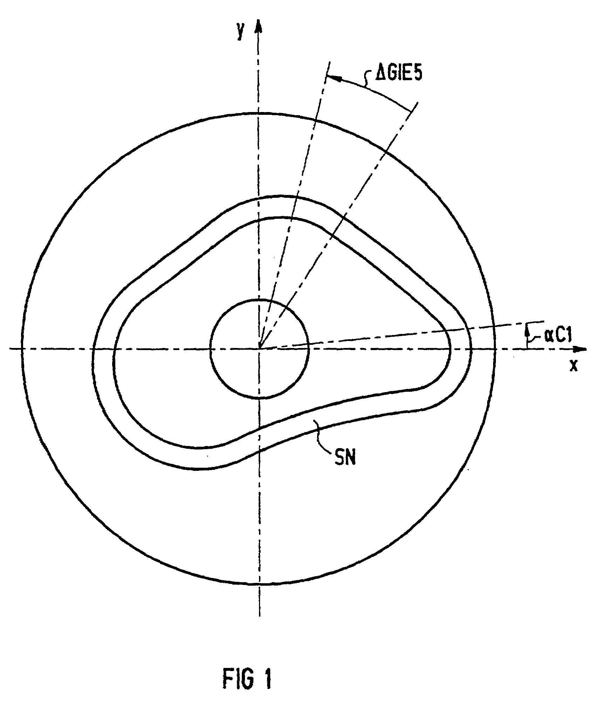

Die Erfindung wird anhand der Vorbearbeitung einer mechanischen Steuerkurve beschrieben. Dazu ist in FIG 1 ein Werkstückrohling zur Aufnahme dieser mechanischen Steuerkurve auf einem Fräsmaschinentisch in der X-Y-Ebene aufgespannt. Die zu erzeugende Steuernut SN beschreibt dabei eine geschlossene Kurve. Die in sich geschlossene mechanische Steuerkurve wird entweder durch eine kartesische Punktfolge P_{i(x,y)} bzw., wie in FIG 1 dargestellt, durch eine Polarkoordinatenpunktfolge Pᵢ(αC1,r) in Abhängigkeit eines Umlaufwinkels αC1 einer fiktiven Achse C1 beschrieben, da der Kurvenverlauf nicht durch wenige Abschnitte mit einfachen arithmetischen Ausdrücken in Form einer mathematischen Funktion beschreibbar ist. Desweiteren ist in FIG 1 ein Teilstück ΔGIE5 der Steuernut gezeigt, welches später folgenden Erläuterungen zu Getriebeinterpolationseinheiten dient.

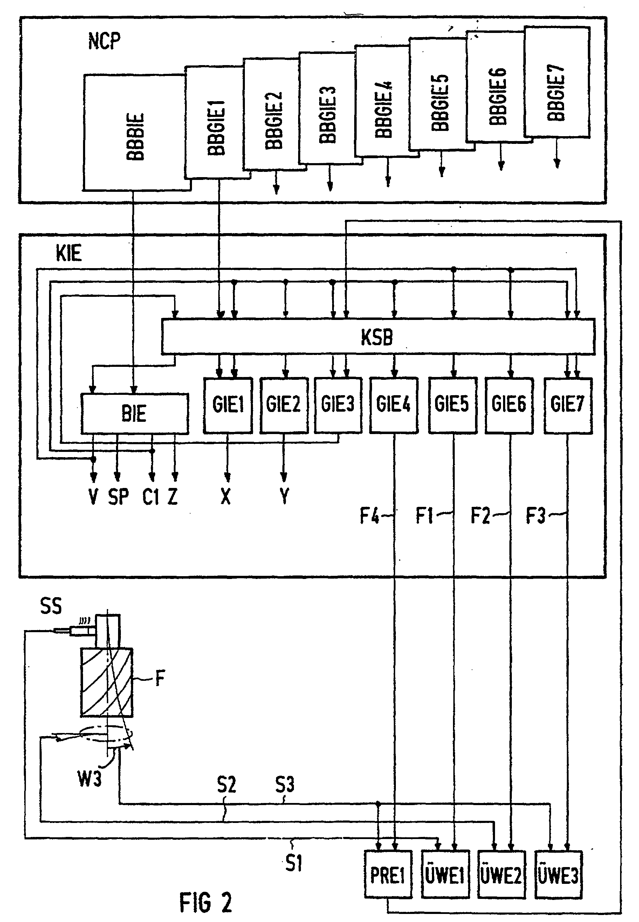

In FIG 2 ist eine numerische Steuerung dargestellt, welche einen Fräser F steuert. Die Steuerung untergliedert sich in einen Bereich, welcher Daten eines NC-Teileprogramms NCP beinhaltet, sowie eine konfigurierbare Interpolator-Einheit KIE. Die konfigurierbare Interpolator-Einheit KIE beinhaltet neben einer herkömmlichen Basisinterpolator-Einheit BIE zusätzlich mehrere Getriebeinterpolator-Einheiten GIE1-GIE7. Sowohl die Basisinterpolator-Einheit BIE als auch die Getriebeinterpolator-Einheiten GIE1-GIE7 sind über einen Konfigurations-Schaltblock KSB miteinander verknüpft. Der NC-Programmbereich NCP beinhaltet ein NC-Teileprogramm, welches sich in mehrere Befehlsblöcke untergliedert, die zum einen der Basisinterpolator-Einheit BIE in Form eines Basisinterpolations-Befehlsblockes BBBIE zugeordnet ist, sowie mehreren Getriebeinterpolations-Befehlsblöcken BBGIE1-BBGIE7, welche jeweils einer korrespondierenden Getriebeinterpolations-Einheit GIE1-GIE7 zugeordnet sind. Der Ausgang jedes Befehlsblockes ist auf den Eingang der korrespondierenden Interpolationseinheit geschaltet und steuert letztere mit den in dem jeweiligen Befehlsblock enthaltenen Daten an. Die Basisinterpolations-Einheit BIE sowie die Getriebeinterpolations-Einheiten GIE1-GIE7 erzeugen Ausgangsgrößen, welche teilweise über den Konfigurationsschaltblock KSB auf sich selbst oder aber auf andere Interpolations-Einheiten rückgekoppelt sind. So ist der Ausgang der Getriebeinterpolations-Einheit GIE3 auf die Basisinterpolations-Einheit BIE rückgeführt. Die Getriebeinterpolations-Einheiten GIE1 und GIE2 erzeugen geometrische Führungssignale zur Ansteuerung der X-Achse X und Y-Achse Y. Die Basisinterpolations-Einheit BIE stellt am Ausgang Führungssignale für den Vorschub V, die Spindel SP, die fiktive C1-Achse C1 sowie eine weitere Achse in Richtung des Vorschubes V, nämlich die Z-Achse Z, zur Verfügung. Sowohl das Ausgangssignal für den Vorschub V als auch das Signal für die fiktive C1-Achse C1 sind über den Konfigurationsschaltblock KSB auf die Getriebeinterpolations-Einheiten GIE1-GIE7 zurückgeführt. Die Getriebeinterpolationseinheiten GIE4-GIE7 erzeugen Führungsgrößen F1-F4 zur Prozeßsteuerung und Prozeßüberwachung. Dazu werden die Führungssignale F1-F3 jeweils einer Überwachungseinheit ÜVE1-ÜVE3 und die Führungsgröße F4 einer Prozeßsteuer/-regelungs-Einheit PRE1 zugeführt. Die Prozeßsteuer/-regelungs-Einheit PRE1 und die Überwachungseinheiten ÜVE1-ÜV3 werden zusätzlich mit Signalen S1-S3 beaufschlagt, welche an einem durch die Basisinterpolations-Einheiten BIE gesteuerten Fräser F ermittelt werden. Über einen Schallsensor SS wird ein Signal S1 für die akustische Emmission zur Überwachungseinheit ÜVE1 geführt. Das Signal S2 beschreibt das aktuelle Drehmoment am Fräser V und wird der Überwachungseinheit ÜVE2 zugeführt. Das Signal S3 ist ein Maß für die ermittelte Fräserabbiegung und wird sowohl der Prozeßsteuer/-regelungs-Einheit PRE1 als auch der Überwachungs-Einheit ÜVE3 zugeführt. Der Ausgang der Prozeßsteuer/-regelungs-Einheit PRE1 ist auf den Konfigurations-Schaltblock KSB zurückgeführt.

Die erfindungsgemäß eingeführten Getriebeinterpolations-Einheiten GIE1-GIE7 arbeiten parallel zur Basisinterpolations-Einheit BIE, welche z.B. nach einer der Baisinterpolationsarten Linear-, Cirkular-, Helikal-, Spline- und Gewindeinterpolation interpoliert. Darüber hinaus sind die Getriebeinterpolations-Einheiten GIE1-GIE7 variabel zur Basisinterpolations-Einheit BIE als auch variabel untereinander und variabel zu beliebigen, im NC-System verfügbaren Quellen und Aktoren, verschaltbar. Jede der Getriebeinterpolator-Einheiten GIE1-GIE7 interpoliert ein Folge-Führungssignal in Abhängigkeit eines Leit-Eingangssignales, so daß entsprechend dem Getriebeprinzip eine Leitbewegung eine Folgebewegung treibt. Prinzipiell können eine oder mehrere Getriebeinterpolationen auch parallel zu mehreren selbständigen Basisinterpolationen durchgeführt werden. Mit den Getriebeinterpolationen werden Getriebeinterpolations-Abschnitte eingeführt, die im NC-Teileprogramm durch programmierbare Schaltbedingungen losgelöst von den Satzgrenzen der Basisinterpolation vorgebbar sind. Jede Getriebeinterpolations-Einheit GIE1-GIE7 erzeugt in ihrem programmierten Getriebeinterpolations-Abschnitt ihr Ausgangssignal bzw. ihre Ausgangssignale entweder entsprechend einem linearen Kopplungsfaktor, entsprechend einem Rädergetriebe, entsprechend einer mathematischen Funktion oder einer beliebigen in einer Tabelle hinterlegten Funktionskurve bzw. Steuerkurve. Eine solche Steuerkurve kann mehrere Sollparameter, insbesondere mehrere Soll-Achsbahnen für eine mehrachsige Werkzeugmaschine, in Abhängigkeit eines Tabellenplatzzeigers in einer Tabelle speichern. Dabei ist es sowohl möglich, die Parameterwerte vorab zu ermitteln und für eine Steuerungsaufgabe fest vorzugeben, als auch diese während des Betriebes in einer Trainingsphase zu ermitteln und diese dadurch an sich ändernde Umgebungsbedingungen anzupassen.

Getriebeinterpolations-Einheiten GIE1-GIE7 können durch Teileprogramm-Befehle, z.B. in Form eines Getriebeinterpolations-Befehlsblockes BBGIE1-BBGIE7 zu einer konfigurierbaren Interpolator-Einheit KIE verschaltet werden.

Neben einer einfachen Verschaltung der Ausgänge der Getriebeinterpolations-Einheiten auf Achs-Aktoren ist auch eine Verschaltung auf beliebige nachfolgende Aktoren möglich. So kann ein Ausgang beispielsweise auf einen Steuereingang für einen Interpolationsparameter, wie Weg oder Geschwindigkeit, einer anderen Getriebeinterpolations-Einheit oder auch der Basisinterpolations-Einheit oder aber als Grenzwert für eine Prozeßüberwachung, wie Werkzeugbruch oder eine Endschalterstellung, aufgeschaltet werden. Die Konfiguration bleibt jeweils über einen Teileprogrammsatz und über das Teileprogramm hinaus bis zu ihrer expliziten Abwahl und Neukonfiguration aktiv.

Das in den Figuren 1 und 2 dargestellte Ausführungsbeispiel zur Einbringung einer Steuernut in einen Werkstückrohling erfolgt derart, daß die Steuernut wegen ihrer Tiefe mit einem Walzenstirnfräser zunächst in mehreren Umläufen bei entsprechender Tiefenzustellung vorgefräst wird, um schließlich mit einem zweiten Fräser die Steuernut fertigzufräsen. Da der Kurvenverlauf der Steuernut nicht durch wenige Abschnitte mit einfachen arithmetischen Ausdrücken in Form einer mathematischen Gleichung beschreibbar ist, wird dieser über eine Steuerkurve tabellarisch als Polarkoordinatenfolge Pᵢ(αC1r) in Abhängigkeit eines Umlaufwinkels αC1 in Tabellenform abgespeichert. Für die herkömmliche Basisinterpolation wäre die Zerlegung in sehr viele lineare, cirkulare bzw. Splinebahnabschnitte und damit auch eine entsprechend hohe Anzahl an NC-Datensätzen erforderlich. Dies erlaubt jedoch wegen der häufigen und recht aufwendigen Satzaufbereitung keine Hochgeschwindigkeitsbearbeitung mit hohen Bahnvorschüben.

Für eine Werkzeugüberwachung wurde bisher der Überwachungsgrenzwert bereits zu dem Zeitpunkt aktiv geschaltet, wenn der Fräser F in die Frässpindel eingewechselt bzw. im Bearbeitungsablauf aktiviert wird. Während eines Teileprogrammsatzes bliebe der Überwachungs-Führungswert konstant und ließe sich nicht an sich eventuell ändernde Belastungen anpassen. Dadurch wird herkömmlicherweise in einer Vielzahl von Anwendungsfällen das vorhandene Potential nicht ausgeschöpft sondern ein Führungswert verwendet, welcher den kleinsten gemeinsamen Nenner, also den innerhalb eines Datensatzes globalen Grenzwert darstellt. Eine Anpassung des Grenzwertverlaufes an jeweils lokale Beschränkungen war somit bisher nicht möglich.

Erfindungsgemäß wird nunmehr durch einen Konfigurations-Befehlsblock KSB im Teileprogramm des NC-Programmbereiches NCP eine aus mehreren Interpolator-Einheiten, also einer Basisinterpolator-Einheit BIE sowie mehreren Getriebeinterpolations-Einheiten GIE1-GIE7 bestehende konfigurierbare Interpolator-Einheit KIE zusammengeschaltet, welche sowohl eine Sollbahn-bzw. Führungswertinterpolation für die komplexen geometrischen Bewegungen als auch Grenzwerte für eine Prozeßüberwachung übernehmen kann.

Zur Erzeugung geometrischer Führungssignale für den Fräser F als Werkzeug und das auf einem beweglichen Werkzeugtisch befindliche Werkstück wird die Führung der Frässpindel SP und der Zustellachse Z, welche die Nuttiefe bestimmt, in konventioneller Weise von der Basisinterpolator-Einheit BIE vorgenommen. Die zum Erzeugen der Bahnkurve erforderlichen Führungswerte für die Frästischachsen X und Y werden durch parallel arbeitende Getriebeinterpolations-Einheiten GIE1 und GIE2 interpoliert und konfigurationsgemäß auf die Frästischachsen X und Y aufgeschaltet. Die beiden Steuerkurven für die Getriebeinterpolations-Einheiten GIE1 und GIE2 liefern in Abhängigkeit vom Umlaufwinkel αC1 der fiktiven Achse C1 die entsprechenden Koordinaten in X- und Y-Richtung bzw. die X/Y-Fahrinkremente pro Tastzeit.

Die fiktive Achse C1, welche eine gemeinsame Leitachse für die Getriebeinterpolations-Einheiten GIE1 und GIE2 darstellt, wird von der Baisinterpolations-Einheit BIE interpoliert und ist ein Zeichen dafür, wie weit der Umlauf entlang der Steuernut SN vorangeschritten ist. Aus diesem Grund sind die Bearbeitungsabschnitte im Teileprogramm des NC-Programmbereiches NCP als Interpolationsabschnitte bzw. Bearbeitungsabschnitte für die fiktive Rundachse C1 programmiert.

Zum Ausfräsen der Nuttiefe kann ein einzelner Satz über mehrere Umdrehungen um die C1-Achse mit entsprechend kontinuierlichem Tiefen-Zustellvorschub für die Z-Achse Z programmiert werden. Im Rahmen der Bearbeitung über eine herkömmliche Basisinterpolations-Einheit BIE besitzt diese Vorgehensweise jedoch den Nachteil, daß innerhalb des einzelnen Teileprogrammsatzes nur einmal Überwachungsgrenzen vorgebbar sind.

Das erfindungsgemäße Steuerverfahren läßt aber alternativ auch das Programmieren von mehreren Umlaufsätzen mit dazwischenliegenden Tiefen-Zustellsätzen in der Z-Achse Z zu. Das erfindungsgemäße Steuerverfahren ermöglicht es, die Steuernut SN mit einem einzelnen Teileprogrammsatz auszufräsen und trotzdem dabei die notwendige Vorschubanpassung an die wechselnden Schneiden-Eingriffsverhältnisse während eines Fräserumlaufes in der Bahnkurve vorzunehmen. Dies wird erreicht durch Vorgabe des Vorschubs an die Basisinterpolations-Einheit BIE durch die Getriebeinterpolations-Einheit GIE3 entsprechend einer für diese Aufgabe ermittelten Steuerkurve.

Im gezeigten Ausführungsbeispiel wird der fiktive Rundachsweg C1 als Leitsignal auf die Getriebeinterpolations-Einheiten GIE1 und GIE2 aufgeschaltet, indem der entsprechende Ausgangswert C1 der Basisinterpolations-Einheit BIE über den Konfigurationsschaltblock KSB auf die Getriebeinterpolations-Einheiten GIE1 und GIE2 rückgeführt wird. Es handelt sich dabei somit um eine sollwertseitige Abhängigkeit für die Folgeachskupplung. Daneben erlaubt das erfindungsgemäße Steuerverfahren jedoch auch, eine istwertseitige Abhängigkeit in der Folgeachskupplung vorzunehmen. So ist in dem vorliegenden Ausführungsbeispiel auch der Fall einer istwertseitigen Folgeachskupplung denkbar. Dazu müßten die Getriebeinterpolations-Einheiten GIE1-GIE7 in der konfigurierbaren Interpolator-Einheit KIE so konfiguriert werden, daß die Rundachse C1 hierbei als reale Achse eines Rundtisches, auf dem das Werkstück aufgespannt wird, vorgesehen ist. Mittels einer der beiden Tischverschiebeachsen X oder Y wird dann die erforderliche radiale Zustellung realisiert. Diese Konfiguration bietet gegenüber dem zuvor dargestellten Ausführungsbeispiel den Vorteil, daß bei unverändertem Fräserdurchmesser die Nutbreite variierbar wäre, indem die radiale Anfangsposition des Fräser entsprechend gewählt wird. Der Führungswert für die Zustellachse würde dann mittels der Getriebeinterpolations-Einheit GIE1 interpoliert. Das Leitsignal für die Getriebeinterpolations-Einheit GIE1 wäre dabei der C1-Lageistwert.

Für viele Bearbeitungsaufgaben ist dabei technologisch vorteilhaft, wenn sich beim Zuschalten der idealen Zustellachs-Kopplung das Werkstück bereits dreht. Damit dabei ein Ruck vermieden wird, ist die Kopplung genau dann zu schließen, wenn die radiale Zustellgeschwindigkeit einen Nulldurchgang aufweist. Dies ist mit dem erfindungsgemäßen Steuerverfahren möglich durch Angabe einer entsprechenden Startbedingung, da eine Getriebeinterpolation in einem Steuerdatenprogramm satzweise bezüglich vorgegebenen Einschalt- bzw. Ausschaltbedingungen programmiert wird. Solche Einschalt- bzw. Ausschaltbedingungen werden zum einen für einzelne Getriebeinterpolations-Abschnitte, zum anderen für die Zuweisung eines Koppelfaktors, einer parametrischen Steuerkurve oder einer mathematischen Funktion eingesetzt. Darüber hinaus kann auch die logische Organisation mehrere Getriebeinterpolationen mittels solcher Einschalt- bzw. Ausschaltbedingungen programmiert werden. Die Getriebeinterpolationen werden daher während eines Steuerprogramm-Ablaufes unabhängig von dessen Satzgrenzen gemäß ihrer programmierten Einschaltbedingungen aktiviert und gemäß ihrer programmierten Ausschaltbedingungen deaktiviert. Im Bezug auf ein Zuschalten der radialen Zustellachs-Kopplung liegen somit beim Ausschalten ähnliche Anforderungen vor, wenn nach dem Aufheben der radialen Zustellungs-Kopplung die Werkstückdrehung unverändert aufrecht erhalten bleiben soll. Auch hier ist es von Vorteil, wenn die radiale Zustellgeschwindigkeit beim Aufheben der radialen Zustellungs-Kopplung einen Nulldurchgang aufweist.

Wegen der während des Fräsumlaufs wechselnden Schneiden-Eingriffsverhältnisse würde ein über den gesamten Umlauf konstant programmierter C1-Achsvorschub entweder zu einer Fräserüberlastung oder, wenn der Wert ausreichend niedrig programmiert wurde, zu einer ungenügenden Auslastung über weite Strecken der Kurvenbahn SN führen. Bei einer konventionellen Programmierung und vielen einzelnen Teileprogrammsätzen kann der für einen sichtbaren Bearbeitungsablauf erforderliche Vorschubverlauf, welcher die wechselnden Eingriffverhältnisse des Fräsers F während des Umlaufs berücksichtigt, erzielt werden. Jedoch erfordert dies sehr viele Satzwechsel und -zeiten.

Im Hinblick auf eine Erzeugung von Führungssignalen zur Prozeßsteuerung durch das erfindungsgemäße Steuerungsverfahren wird die Sollgeschwindigkeit der C1-Sollwertinterpolation, durch die Getriebeinterpolations-Einheit GIE3 in Abhängigkeit vom erreichten C1-Umlaufwinkel αC1 gesteuert. Zu diesem Zweck wird das C1-Führungssignal C1 auch auf den Eingang der Getriebeinterpolationseinheit GIE3 und das Ausgangssignal der Getriebeinterpolationseinheit GIE3 auf den Steuereingang für die Vorschubbeeinflussung der Basisinterpolations-Einheit BIE aufgeschaltet, welcher quasi die Funktion eines Override-Eingangs besitzt. Die Abhängigkeit zwischen dem Ausgangssignal der Getriebeinterpolations-Einheit GIE3 und dem genannten Steuereingang der Basisinterpolations-Einheit BIE wird in einer Steuerkurve für die Getriebeinterpolations-Einheit GIE3 hinterlegt. Die genannte Steuerkurve kann bereits bei der Programmerstellung festgelegt werden. Wegen der schwer überschaubaren Schneiden-Eingriffsverhältnisse werden die Verläufe solcher Steuerkurven bei dem erfindungsgemäßen Steuerverfahren häufig auch erst bei der Teileprogramm-Inbetriebnahme bzw. Teileprogramm-Optimierung ermittelt bzw. gelernt. Dies geschieht z.B. unter Messung der jeweils auftretenden Belastung.

Eine vorteilhafte Möglichkeit zur Ermittlung der Verläufe solcher Steuerkurven besteht erfindungsgemäß darin, daß hierfür ein neuronales Netz bzw. miteinander verbundene neuronale Netze eingesetzt werden. Durch diese Maßnahme kann einer Veränderung der Parameter im Laufe des Betriebs einer Werkzeugmaschine mit dem erfindungsgemäßen Steuerungsverfahren Rechnung getragen werden. Außerdem können durch diese Maßnahme Parameter als Eingangsgrößen berücksichtigt werden, für die zur Ermittlung nach einem herkömmlichen Verfahren keine ausreichenden Informationen vorlagen. In der Trainingsphase wird einem in FIG 2 nicht abgebildeten neuronalen Netz, welches vorteilhafterweise aus einer Eingangsschicht mit mehreren Eingangsneuronen, einer oder mehreren Zwischenschichten und einer Ausgangsschicht mit einer entsprechenden Anzahl von Ausgangsneuronen aufgebaut ist, die Sollposition sowie die Istposition zugeführt, was zu einer Normierung dieser Information führt. Darüber hinaus können als Eingangsgrößen weitere Informationssignale, welche den Zustand des Werkzeugs, im Falle des Ausführungsbeispiels des Fräsers F, beschreiben, verwendet werden. Dies sind beispielsweise die Überwachungssignale S1 bis S3. Ausgangsgröße dieses neuronalen Netzes ist dann eine Steuerkurve, welche eine im Hinblick auf die tatsächlichen Belastungsverhältnisse des Fräsers F optimierte Abhängigkeit von C1-Führungssignal der Getriebeinterpolations-Einheit GIE3 und der Vorschubbeinflussung der Basisinterpolations-Einheit BIE beschreibt. Eine vorteilhafte Art eines solchen neuronalen Netzes stellt beispielsweise ein sogenannts Multilayer-Perceptron dar. Daneben lassen sich jedoch vorteilhaft auch andere Arten von neuronalen Netzen wie beispielsweise sogenannten Hoppfield-Netzwerke oder sogenannten Kohonen-Feature-Maps einsetzen. Die letztgenannten Arten von neuronalen Netzen besitzen den Vorteil, daß während der Trainingsphase zum Lernen einer Steuerkurve keine Istwerte vorgegeben werden müssen, sondern allein durch Zur-Verfügung-stellen von Signalen S1 bis S3 selbst optimierend eine geeignete Steuerkurve ermittelt wird.

In dem Ausführungsbeispiel in FIG 2 liefert die Getriebeinterpolations-Einheit GIE4 ein Abbiegungsführungssignal F4 für eine Prozeßsteuer/-regelungs-Einheit PRE1, die beginnend mit dem programmierten Basisvorschub, den aktuellen Vorschub V immer so einstellt, daß die in der Steuerkurve der Getriebeinterpolations-Einheit GIE4 nutbahnumlauf-abhängig vorgegebenen zulässigen Fräserabbiegungswerte W3 eingehalten werden. Damit können höhere Genauigkeitsanforderungen für die Nut bei erhöhter Produktivität durch Ausnutzung einer optimalen Vorschubgeschwindigkeit erfüllt werden. Dies wird erreicht, indem in Bereichen des Nutverlaufs mit geringer radialer Änderung wie beispielsweise anhand von FIG 1 mit der Teilstrecke ΔGIE5 der Steuernut SN gezeigt, ein höherer Führungswert für die Fräserabbiegung V3 in der Steuerkurve vorgebbar ist, da die Abbiegung dominierend in die Nutrichtung zeigt und dann nur zu einem sehr kleinen Genauigkeitsfehler beim Nutverlauf führt.

Vorteilhaft ist dabei, daß sich der richtige Bahnvorschub entlang der Nutkurve SN automatisch einstellt. Hierdurch wird eine Teileprogramminbetriebnahme erheblich verkürzt. Eine solche Fräserabbiegungs-Prozeßregelung setzt bei Abbiegungsüberschreitung ihren Vorschubbeeinflussungsaktor im Rahmen des Stellbereichs bis an die systemgegebene untere Grenze herab und bei Unterschreitung herauf. Liegt eine Überschreitung der Abbiegung, also der senkrecht zum Umfang des Fräsers F einwirkenden Kraft, noch an der unteren Vorschubbereichsgrenze vor, so wird die Abbiegungs-Überwachungseinheit ÜVE3 aktiv und zwar mit einer Überwachungsschwelle, welche dem minimalen Vorschub in der Steuerkurve der Getriebeinterpolations-Einheit GIE7 zugeordnet ist. Als Reaktion werden beispielsweise ein Signal "Vorschub-Stopp" oder "Rückzug außer Schnitt" erzeugt.

Wie bereits im vorangehenden Absatz angerissen, können mit dem erfindungsgemäßen Steuerungsverfahren Führungssignale zur Prozeßüberwachung erzeugt werden. Zu einer Prozeßüberwachung für das Fräserspindelmoment liefert die Getriebeinterpolations-Einheit GIE6 den vorschubabhängigen Grenzwert F2 für die Prozeßüberwachungseinheit ÜVE2, welche das FräserspindelMoment S2 überwacht. Eine Werkzeugverschleiß-Überwachung erfolgt im vorliegenden Ausführungsbeispiel durch die Getriebeinterpolations-Einheit GIE5, welche in Abhängigkeit eines fiktiven Rundachsbahnweges C1 den Führungswert für die Überwachungseinheit ÜVE1 interpoliert, die eine Werkzeug-Verschleißüberwachung anhand der vom Werkzeug ausgesandten Akustik-Emission vornimmt. In FIG 2 ist anhand des Fräsers F dargestellt, daß die Schallsignalabnahme durch einen Schallsensor SS so nahe wie möglich am Werkzeug F vorgenommen wird. Die Getriebeinterpolations-Einheit GIE5 interpoliert den aktuellen Führungswert F1 für die Verschleißgrenze in Abhängigkeit von der aktuellen Vorschubgröße V. Die Verschleißüberwachung durch die Überwachungseinheit ÜVE1 wird nur dann aktiv geschaltet, wenn definierte Schneideneingriffsverhältnisse vorliegen. Dies ist beispielsweise in einem solchen Bahnabschnitt gegeben, indem die Steuernut SN mit konstantem radialem Abstand vom Zentrumsmittelpunkt verläuft. Ein solcher Nutverlaufsabschnitt mit geringer radialer Änderung ist in FIG 1 anhand des Teilabschnittes ΔGIE5 gekennzeichnet. Das selektive Aktivschalten der Werkzeugverschleiß-Überwachung während der gewünschten Bearbeitungsphase wird durch die entsprechende Programmierung von Schaltbedingungen für die Getriebeinterpolations-Einheit GIE5 realisiert. Die Führungswerte F1 für die Verschleißüberwachung werden während der Teileprogramm-Inbetriebnahme ermittelt oder aber, wie bereits ausgeführt, nach der Programm-Inbetriebnahme im Rahmen einer Lehrnbearbeitung durch ein neuronales Netz in einer Getriebeinterpolations-Steuerkurve gespeichert, indem ein konfiguriertes Prozeßzustands-Signal gemessen und gewichtet oder ungewichtet als Führungswert verwendet wird. Diese falschspezifischen Steuerkurven kommen dann während der Fertigung in den Getriebeinterpolations-Einheiten GIE1-GIE7 als Referenz-Führungswerte F1-F4 zur Fertigungsüberwachung zur Anwendung, z.B. als Grenzwerte für das Fräsermoment F2 oder den Vorschub V.

Das im vorliegenden Ausführungsbeispiel über mehrere Umläufe verteilte Ausfräsen der Steuernut SN kann als ein einzelner Vorschub-Satz für die fiktive Rundachse C1 und die Zustellachse Z im Basisinterpolations-Abschnitt der Basisinterpolations-Einheit BIE im NC-Programmbereich NCP programmiert werden. In diesem Satz laufen die Prozeßphasen Schneiden in der Luft, Anschneiden, Schneiden, Ausschneiden und wieder Schneiden in der Luft ab. Da die Getriebeinterpolations-Abschnitte nicht an die Satzgrenzen des Basisinterpolations-Abschnitts gebunden sind, kann die Prozeßüberwachung in frei definierbaren Prozeßablaufabschnitten aktiviert, umgeschaltet oder abgeschaltet werden. Die Getriebeinterpolations-Abschnittsgrenzen für die jeweilige Getriebeinterpolations-Einheiten GIE1-GIE7 können sowohl parallel zum Basisinterpolations-Abschnitt, aber auch über dessen Grenzen hinaus programmiert werden. Ein Koppelfaktor oder eine Steuerkurve, sei es in Form einer parametrierbaren Tabelle oder einer mathematischen Funktion, eines Getriebeinterpolations-Abschnittes werden mittels Einschaltbedingungen oder Umschaltbedingungen parametriert und durch diese unabhängig vom NC-Programm NCP und dessen Satzgrenzen eingeschaltet bzw. umgeschaltet.

## Patentansprüche

1. Verfahren zur numerischen Steuerung von Maschinen mit mehreren Achsen (X,Y,Z), insbesondere Werkzeugmaschinen oder Robotern, mit Verkoppelung mehrerer Achsen im Sinne der Funktionalität eines elektronischen Getriebes, wobei
1.1 eine oder mehrere Interpolationen (GIE1...GIE7), verkoppelt im Sinne der Funktionalität eines elektronischen Getriebes, welche eine Leitbewegung in eine Folgebewegung umsetzen, durchgeführt werden, **dadurch gekennzeichnet, daß**
1.2 jede dieser Interpolationen, verkoppelt im Sinne der Funktionalität eines elektronischen Getriebes (GIE1...GIE7), parallel zu einer oder mehreren Basisinterpolationen (BIE) zugeordnet wird,
1.3 eine dieser Interpolationen, verkoppelt im Sinne der Funktionalität eines elektronischen Getriebes (GIE1...GIE7), unabhängig von Satzgrenzen einer Basisinterpolation (BIE) in eigenen Interpolations-Abschnitten für die Steuerung zuständig ist.

2. Verfahren nach Anspruch 1, **dadurch gekennzeichnet, daß**
2.1 das Koppelverhalten einer Achskopplung, verkoppelt im Sinne der Funktionalität eines elektronischen Getriebes (GIE1...GIE7), mittels eines Koppelfaktors und/oder einer tabellarisch gespeicherten Steuerkurve, insbesondere für beliebig viele Soll-Achsbahnen und/oder Soll-Führungsgrößen, und/oder einer als mathematische Funktionsgleichung gespeicherten Steuerkurve programmiert wird.

3. Verfahren nach Anspruch 1 oder 2, **dadurch gekennzeichnet, daß**
3.1 Achskopplungen, verkoppelt im Sinne der Funktionalität eines elektronischen Getriebes (GIE1...GIE7), kaskadiert werden und/oder
3.2 Achskopplungen, verkoppelt im Sinne der Funktionalität eines elektronischen Getriebes (GIE1...GIE7), direkt oder indirekt rückgekoppelt werden, indem der Ausgangswert oder die Ausgangswerte einer oder mehrerer Achskopplungen im Sinne der Funktionalität eines elektronischen Getriebes (GIE1...GIE7) als Eingangswert dieser und/oder einer Basisinterpolation (BIE) und/oder von weiteren Achskopplungen im Sinne der Funktionalität eines elektronischen Getriebes (GIE1...GIE7) verwendet werden, und/oder
3.3 Achskopplungen, verkoppelt im Sinne der Funktionalität eines elektronischen Getriebes (GIE1...GIE7), je nach Bedarf variabel mit beliebigen vorhandenen Quellen und Aktoren verschaltet werden.

4. Verfahren nach Anspruch 1, 2 oder 3, **dadurch gekennzeichnet, daß**
4.1 eine Achskopplung, verkoppelt im Sinne der Funktionalität eines elektronischen Getriebes (GIE1...GIE7), in einem Steuerdatenprogramm (NCP) satzweise bezüglich Einschaltbedingungen und Ausschaltbedingungen für den Getriebeinterpolations-Abschnitt, wobei als Getriebeinterpolation Achskopplungen, verkoppelt im Sinne der Funktionalität eines elektronischen Getriebes, anzusehen sind, und/oder
der Zuweisung eines Koppelfaktors oder einer Steuerkurve und/oder
der logischen Systemorganisation mehrerer Interpolationen programmiert wird.

5. Verfahren nach einem der vorstehenden Ansprüche, **dadurch gekennzeichnet, daß**
5.1 Achskopplungen, verkoppelt im Sinne der Funktionalität eines elektronischen Getriebes (GIE1...GIE7), während eines Steuerungsprogrammlaufs unabhängig von dessen Satzgrenzen gemäß ihrer programmierten Einschaltbedingungen aktiviert bzw. gemäß ihrer programmierten Ausschaltbedingungen deaktiviert werden.

6. Verfahren nach einem der vorstehenden Ansprüche, **dadurch gekennzeichnet, daß**
6.1 ein Koppelfaktor und/oder eine Steuerkurve einer Achskopplung, verkoppelt im Sinne der Funktionalität eines elektronischen Getriebe-Abschnittes, mittels Einschaltbedingungen und/oder Umschaltbedingungen parametriert wird und durch diese unabhängig von Steuerungsprogramm-Satzgrenzen eingeschaltet bzw. umgeschaltet wird.

7. Verfahren nach einem der vorstehenden Ansprüche, **dadurch gekennzeichnet, daß**
7.1 ein Ausgang einer oder mehrerer Achskopplungen, verkoppelt im Sinne der Funktionalität eines elektronischen Getriebes (GIE1...GIE7), neben einer Geometrieinterpolation alternativ auch zur Führungswertinterpolation, insbesondere für die Prozeßsteuerung und -überwachung (PRE), verwendet wird.

8. Verfahren nach einem der vorstehenden Ansprüche, **dadurch gekennzeichnet, daß**
8.1 eine Steuerkurve für das Koppelverhalten einer Achskopplung, verkoppelt im Sinne der Funktionalität eines elektronischen Getriebes (GIE1...GIE7), erlernt wird, insbesondere durch den Einsatz eines neuronalen Netzes.

9. Verfahren nach einem der vorstehenden Ansprüche, **dadurch gekennzeichnet, daß**
9.1 die Konfiguration einer oder mehrerer Achskopplungen, verkoppelt im Sinne der Funktionalität eines elektronischen Getriebes (GIE1...GIE7), jeweils über einen Steuerungsprogramm-Satz und über das Steuerungsprogramm hinaus bis zur expliziten Abwahl aktiv ist.

10. Vorrichtung zur numerischen Steuerung von Maschinen mit mehreren Achsen (X,Y,Z), insbesondere Werkzeugmaschinen oder Robotern, mit Verkoppelung der Achsen im Sinne der Funktionalität eines elektronischen Getriebes, wobei
10.1 eine oder mehrere Interpolations-Einheiten (GIE1...GIE7) im Sinne der Funktionalität eines elektronischen Getriebes vorgesehen sind, **dadurch gekennzeichnet, daß**
10.2 diese Interpolations-Einheiten (GIE1...GIE7), verkoppelt im Sinne der Funktionalität eines elektronischen Getriebes, über einen Konfigurations-Schaltblock (KSB) mit Führungsgrößen (F1...F4), untereinander und/oder mit einer Basisinterpolations-Einheit (BIE) verschaltet sind,
10.3 die Ausgänge dieser Interpolations-Einheiten (GIE1...GIE7), verkoppelt im Sinne der Funktionalität eines elektronischen Getriebes, und/oder Basisinterpolations-Einheiten (BIE) über den Konfigurations-Schaltblock (KSB) auf ihre Eingänge rückkoppelbar sind.

## Claims

1. Method for the numerical control of machines with several axes (X, Y, Z), particularly machine tools or robots, with several axes being connected in the sense of the functionality of an electronic gear system, whereby
1.1 one or more interpolations (GIE1 ... GIE7), coupled in the sense of the functionality of an electronic gear system, which convert a control movement into a sequential movement, are performed, **characterised in that**
1.2 each of these interpolations, coupled in the sense of the functionality of an electronic gear system (GIE1 ... GIE7), is arranged parallel to one or more basic interpolations (BIE),
1.3 one of these interpolations, coupled in the sense of the functionality of an electronic gear system (GIE1 ... GIE7), is responsible for the control in its own interpolation steps independent of the data record limits of a basic interpolation (BIE).

2. Method in accordance with claim 1, **characterised in that**
2.1 the coupling behaviour of an axis coupling coupled in the sense of the functionality of an electronic gear system (GIE1 ... GIE7), is programmed by means of a coupling factor and/or a control curve stored in tabular form, particularly for any number of set axis paths and/or set control variables, and/or as a control curve stored as a mathematical function equation.

3. Method in accordance with claim 1 or 2, **characterised in that**
3.1 axis couplings, coupled in the sense of the functionality of an electronic gear system (GIE1 ... GIE7), are cascaded and/or
3.2 axis couplings, coupled in the sense of the functionality of an electronic gear system (GIE1 ... GIE7), are directly or indirectly fed back, **in that** the output value or output values of one or more axis couplings in the sense of the functionality of an electronic gear system (GIE1 ... GIE7) are used as the input value of this and/or a basic interpolation (BIE) and/or of other axis couplings in the sense of the functionality of an electronic gear system (GIE1 ... GIE7), and/or
3.3 axis couplings, coupled in the sense of the functionality of an electronic gear system (GIE1 ... GIE7), are variably connected as required to any existing sources and actuators.

4. Method in accordance with claim 1, 2 or 3, **characterised in that**
4.1 an axis coupling, coupled in the sense of the functionality of an electronic gear system (GIE1 ... GIE7), in a control data program (NCP) by data records with regard to switch-on conditions and switch-off conditions for the gear interpolation step, whereby axis couplings, coupled in the sense of the functionality of an electronic gear system, are to be regarded as gear interpolation,
and/or
the assignment of a coupling factor or control curve
and/or
the logic system organisation of several interpolations is programmed.

5. Method in accordance with one of the above claims, **characterised in that**
5.1 axis couplings, coupled in the sense of the functionality of an electronic gear system (GIE1 ... GIE7), are, during a control program sequence, activated independent of its data record limits in accordance with their programmed switch-on conditions, or deactivated in accordance with their programmed switch-off conditions.

6. Method in accordance with one of the above claims, **characterised in that**
6.1 a coupling factor and/or a control curve of an axis coupling, coupled in the sense of the functionality of an electronic gear step, is parametered by means of switch-on conditions and/or switch-over conditions and switched on or switched over by this independent of control program data record limits.

7. Method in accordance with one of the above claims, **characterised in that**
7.1 an output of one or more axis couplings, coupled in the sense of the functionality of an electronic gear system (GIE1 ... GIE7), is, in addition to a geometry interpolation, also used as an alternative for control value interpolation, particularly for process control and monitoring (PRE).

8. Method in accordance with one of the above claims, **characterised in that**
8.1 a control curve for the coupling behaviour of an axis coupling, coupled in the sense of the functionality of an electronic gear system (GIE1 ... GIE7), is learned, particularly by the use of a neuronal network.

9. Method in accordance with one of the above claims, **characterised in that**
9.1 the configuration of one or more axis couplings, coupled in the sense of the functionality of an electronic gear system (GIE1 ... GIE7), is active in each case beyond a control program data record and beyond the control program until it is explicitly deselected.

10. Device for numerical control of machines with several axes (X, Y, Z), particularly machine tools or robots, with coupling of the axes in the sense of the functionality of an electronic gear system, whereby
10.1 one or more interpolation units (GIE1 ... GIE7) are provided in the sense of the functionality of an electronic gear system, **characterised in that**,
10.2 these interpolation units (GIE1 ... GIE7), coupled in the sense of the functionality of an electronic gear system, are connected through a configuration switch block (KSB) to control variables (F1 ... F4), to each other and/or to a basic interpolation unit (BIE),
10.3 the outputs of these interpolations units (GIE1 ... GIE7), coupled in the sense of the functionality of an electronic gear system, and/or basic interpolation units (BIE) can be fed back to their inputs via the configuration switch block (KSB)

## Revendications

1. Procédé pour la commande numérique de machines ayant plusieurs axes (X, Y, Z), notamment de machines-outils ou de robots, avec couplage de plusieurs axes dans le sens de la fonctionnalité d'une transmission électronique,
1.1 dans lequel on effectue une ou plusieurs interpolations (GIE1 à GIE7), couplées dans le sens de la fonctionnalité d'une transmission électronique, qui transforment un mouvement de guidage en un mouvement de poursuite, **caractérisé par le fait que**
1.2 on associe chacune de ces interpolations, couplées dans le sens de la fonctionnalité d'une transmission électronique (GIE1 à GIE7), en parallèle à une ou plusieurs interpolations de base (BIE),
1.3 l'une de ces interpolations, couplées dans le sens de la fonctionnalité d'une transmission électronique (GIE1 à GIE7), est compétente pour la commande indépendamment de limites de séquence d'une interpolation de base (BIE) dans des sections d'interpolation propres.

2. Procédé selon la revendication 1, **caractérisé par le fait que**
2.1 on programme le comportement d'un couplage d'axes, couplés dans le sens de la fonctionnalité d'une transmission électronique (GIE1 à GIE7), au moyen d'un facteur de couplage et/ou d'une courbe de commande mémorisée sous forme de tableau, notamment pour un nombre quelconque de trajectoires d'axes de consigne et/ou de grandeurs de commande de consigne, et/ou d'une courbe de commande mémorisée sous forme d'équation mathématique.

3. Procédé selon la revendication 1 ou 2, **caractérisé par le fait que**
3.1 on met en cascade des couplages d'axes, couplés dans le sens de la fonctionnalité d'une transmission électronique (GIE1 à GIE7), et/ou
3.2 on branche en rétroaction directement ou indirectement des couplages d'axes, couplés dans le sens de la fonctionnalité d'une transmission électronique (GIE1 à GIE7), en utilisant la valeur de sortie ou les valeurs de sortie d'un ou de plusieurs couplages d'axes, couplés dans le sens de la fonctionnalité d'une transmission électronique (GIE1 à GIE7), comme valeur d'entrée de ceux-ci et/ou d'une interpolation de base (BIE) et/ou d'autres couplages d'axes, couplés dans le sens de la fonctionnalité d'une transmission électronique (GIE1 à GIE7), et/ou
3.3 on branche des couplages d'axes, couplés dans le sens de la fonctionnalité d'une transmission électronique (GIE1 à GIE7), de manière variable à chaque fois selon les besoins avec des sources et des actionneurs quelconques existants.

4. Procédé selon la revendication 1, 2 ou 3, **caractérisé par le fait que**
4.1 on programme un couplage d'axes, couplés dans le sens de la fonctionnalité d'une transmission électronique (GIE1 à GIE7), dans un programme de données de commande (NCP) séquence par séquence par rapport
à des conditions de lancement et à des conditions d'arrêt pour la section d'interpolation de transmission, des couplages d'axes, couplés dans le sens de la fonctionnalité d'une transmission électronique, étant à considérer comme interpolation de transmission, et/ou
à l'attribution d'un facteur de couplage ou d'une courbe de commande, et/ou
à l'organisation de système logique de plusieurs interpolations.

5. Procédé selon l'une des revendications précédentes, **caractérisé par le fait que**
5.1 on active des couplages d'axes, couplés dans le sens de la fonctionnalité d'une transmission électronique (GIE1 à GIE7), pendant une exécution de programme de commande indépendamment de ses limites de séquence selon leurs conditions de lancement programmées et on les désactive selon leurs conditions d'arrêt programmées.

6. Procédé selon l'une des revendications précédentes, **caractérisé par le fait que**
6.1 on paramètre un facteur de couplage et/ou une courbe de commande d'un couplage d'axes, couplés dans le sens de la fonctionnalité d'une section de transmission électronique, au moyen de conditions de lancement et/ou de conditions de commutation et on lance ou commute par celles-ci indépendamment de limites de séquence de programme de commande.

7. Procédé selon l'une des revendications, **caractérisé par le fait que**
7.1 on utilise une sortie d'un ou plusieurs couplages d'axes, couplés dans le sens de la fonctionnalité d'une transmission électronique (GIE1 à GIE7), outre pour l'interpolation de géométrie, selon une variante aussi pour l'interpolation de valeur de commande, notamment pour la commande et le contrôle de processus (PRE).

8. Procédé selon l'une des revendications précédentes, **caractérisé par le fait que**
8.1 on apprend une courbe de commande pour le comportement d'un couplage d'axes, couplés dans le sens de la fonctionnalité d'une transmission électronique (GIE1 à GIE7), notamment en utilisant un réseau neuronal.

9. Procédé selon l'une des revendications précédentes, **caractérisé par le fait que**
9.1 la configuration d'un ou de plusieurs couplages d'axes, couplés dans le sens de la fonctionnalité d'une transmission électronique (GIE1 à GIE7), est active à chaque fois au-delà d'une séquence de programme de commande et du programme de commande jusqu'à la désélection explicite.

10. Dispositif pour la commande numérique de machines ayant plusieurs axes (X, Y, Z), notamment de machines-outils ou de robots, avec couplage de plusieurs axes dans le sens de la fonctionnalité d'une transmission électronique,
10.1 dans lequel une ou plusieurs unités d'interpolation (GIE1 à GIE7) sont prévues dans le sens de la fonctionnalité d'une transmission électronique, **caractérisé par le fait que**
10.2 ces unités d'interpolation (GIE1 à GIE7), couplées dans le sens de la fonctionnalité d'une transmission électronique, sont branchées par l'intermédiaire d'un bloc de commutation de configuration (KSB) avec grandeurs de commande (F1 à F4), entre elles et/ou avec une unité d'interpolation de base (BIE),
10.3 les sorties de ces unités d'interpolation (GIE1 à GIE7), couplées dans le sens de la fonctionnalité d'une transmission électronique, et/ou des unités d'interpolation de base (BIE) peuvent être branchées en rétroaction sur leurs entrées par l'intermédiaire du bloc de commutation de configuration (KSB).
